Europäisches Patentamt

European Patent Office

Office européen des brevets

(11) Veröffentlichungsnummer: **0 226 703**
**A2**

## (12) EUROPÄISCHE PATENTANMELDUNG

(21) Anmeldenummer: 86110586.4

(22) Anmeldetag: 31.07.86

(51) Int. Cl.⁴: **G01D 5/16**

(30) Priorität: 28.10.85 DE 3538232

(43) Veröffentlichungstag der Anmeldung:
01.07.87 Patentblatt 87/27

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Ungermann, Heinz**
**Wagnergasse 1a**
**D-6464 Linsengericht(DE)**
Erfinder: **Sauerschell, Wolfgang**
**Mauerfeldstrasse 18**
**D-6370 Oberursel(DE)**
Erfinder: **Heumann, Wilfried, Dr. Ing.**
**Kurt-Schumacher-Strasse 25**
**D-6392 Neu-Anspach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Elektrischer Sollwertgeber.**

(57) Bei einem elektrischen Sollwertgeber für Kraftfahrzeuge, insbesondere für elektrische Gaspedal-Anlagen, mit einem Betätigungselement und einem Widerstandselement, das mit dem Betätigungselement verbunden ist, ist in dem eine bauliche Einheit bildenden elektrischen Sollwertgeber eine elektrische Schaltung vorgesehen, welche einen Impedanzwandler und ggf. eine Stabilisierungsschaltung und Schwellwertschalter umfaßt. Das Widerstandselement ist vorzugsweise ein Leitplastik-Potentiometer, wodurch eine gute Zuverlässigkeit und eine Möglichkeit zum Einsatz bei hohen Temperaturen gegeben sind.

FIG.1

## Elektrischer Sollwertgeber

Die Erfindung betrifft einen elektrischen Sollwertgeber für Kraftfahrzeuge, insbesondere als elektrisches Gaspedal, mit einem Betätigungselement und einem Widerstandselement, das mit dem Betätigungselement verbunden ist, wobei an einem Ausgang des elektrischen Sollwertgebers eine elektrische Spannung abnehmbar ist, welche die Stellung des Betätigungselementes wiedergibt.

Bei elektrischen Sollwertgebern für Kraftfahrzeuge, insbesondere für elektrische Gaspedal-Anlagen, ist eine extrem hohe Zuverlässigkeit zu fordern. Bei bekannten Sollwertgebern dieser Art werden zwar zur Umwandlung der mechanischen Stellung in eine elektrische Spannung Potentiometer verwendet, bei welchen ein Schleifkontakt auf einer elektrischen Widerstandsbahn schleift. Diese weisen jedoch verschiedene Nachteile auf, insbesondere ist eine sichere Kontaktgabe zwischen dem Schleifkontakt und der Widerstandbahn nicht immer gewährleistet.

Es sind zwar Leitplastik-Potentiometer bekannt, die äußerst zuverlässig und bei den hohen im Kraftfahrzeug, insbesondere in Motornähe, auftretenden Temperaturen verwendbar sind. Diese Leitplastik-Potentiometer weisen jedoch den Nachteil auf, daß der Kontakt zwischen Schleifer und Widerstandsbahn nur mit sehr geringen Strömen belastet werden kann.

Insbesondere bei einem Kraftfahrzeug führen hochohmige Leitungen jedoch zu Störungen. So machen sich beispielsweise durch Feuchtigkeit entstehende Kriechströme sowie elektrische und magnetische Einstreuungen wesentlich stärker bemerbar als bei niederohmigen Leitungen. Außerdem neigen Kontakte von Steckverbindungen und Schatern häufiger zu Fehlern, wenn ihre Strombelastung äußerst gering ist.

Aufgabe der vorliegende Erfindung ist es daher, einen elektrischen Sollwertgeber für Kraftfahrzeuge, insbesondere für elekische Gaspedal-Anlagen, anzugeben, welcher bei möglichst geringem technischen Aufwand eine zuverlässge Funktion gewährleistet.

Diese Aufgabe wird erfindungsgemäß dadurch gelöst, daß in dem eine baliche Einheit bildenden Sollwertgeber eine elektrische Schaltung vorgesehen ist, welche einen Impenzwandler umfaßt, dessen Ausganng den Ausgang des elektrischen Sollwertgebers bildet.

Durch diese erfindungsgemäße Gestaaltung des elektrischen Sollwertgebers wird eine äußerste Zuverlässigkeit des Sollwertgebers selbstt erreicht. Außerdem wird die Voraussetzung dafür geschaffen, daß Fehlermöglichkeiten bei den mit dem elektrischen Sollwert geber verbundenen Baugruppen, insbesondere den Leitungen und Steckern, verringert werden.

Eine besonders hohe Zuverlässigkeit ergibt sich durch die Verwendung von Leitplastik-Potentiometern. Bei Weiterbildungen der Erfindung kann die elektrische Schaltung ferner eine Anordnung zur Vermeidung von Zerstörungen bei falscher Polung der zugeführten Betriebsspannung - (Verpolschutz) und eine Schaltung zur Stabilisierung der Betriebsspannung enthalten.

Hierdurch wird zum einen eine höhere Sicherheit bei Montage-bzw. Wartungsarbeiten erreicht und zum anderen eine größere Störsignalfreiheit des abgegebenen elektrischen Signals erzielt.

Eine andere Weiterbildung besteht darin, daß ein oder mehrere elektronische Schwellwertschalter vorgesehen sind, deren Ausgangssignale von einem Zustand in einen anderen übergehen, wenn das Betätigungselement eine vorgegebene Stellung über-bzw. unterschreitet. Bei bekannten Sollwertgebern sind nämlich zusätzlich Schalter angeordnet, welche jeweils bei vorgegebenen Stellungen des Betätigungselementes betätigt werden. So wird z. B. bei einem elektrischen Gaspedal ein Schalter betätigt, wenn das Gaspedal aus der Leerlaufstellung herausgebracht wird. Ein weiterer Schalter ist in einigen Fällen zur Kennzeichnung der Vollgasstellung (Kick-down) angeordnet. Mit Hilfe der letztgenannten Weiterbildung der Erfindung können diese mechanischen Schalter ersetzt oder gegebenenfalls ergänzt werden, womit eine höhere Zuverlässigkeit und/oder ein geringerer technischer Aufwand erzielbar ist.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1 das Ausführungsbeispiel in stark - schematisierter Form und

Fig. 2 bis 6 Ausführungsbeispiele für Schaltungsanordnungen im einzelnen.

. Gleiche Teile sind in den Figuren mit gleichen Bezugszeichen versehen.

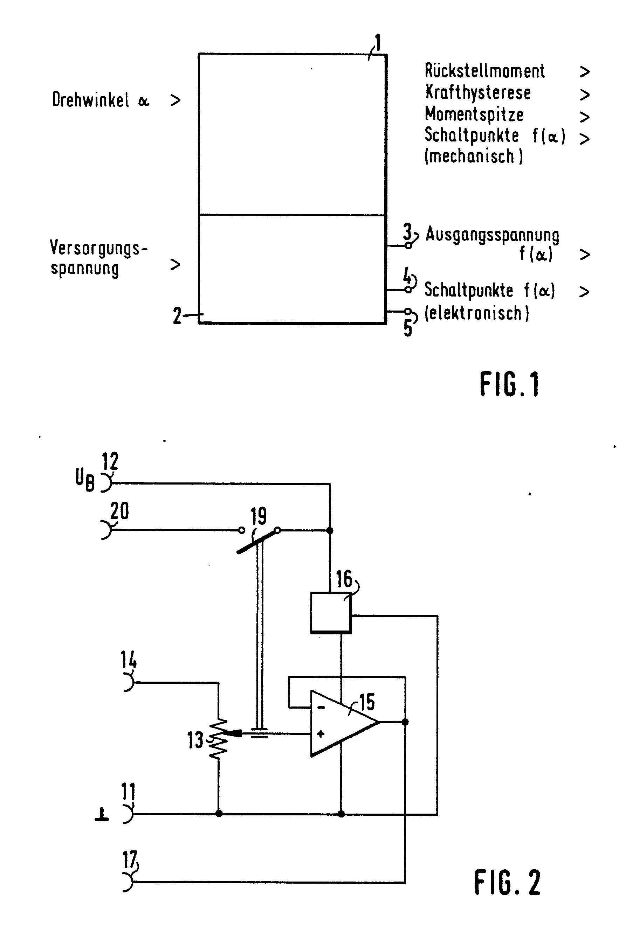

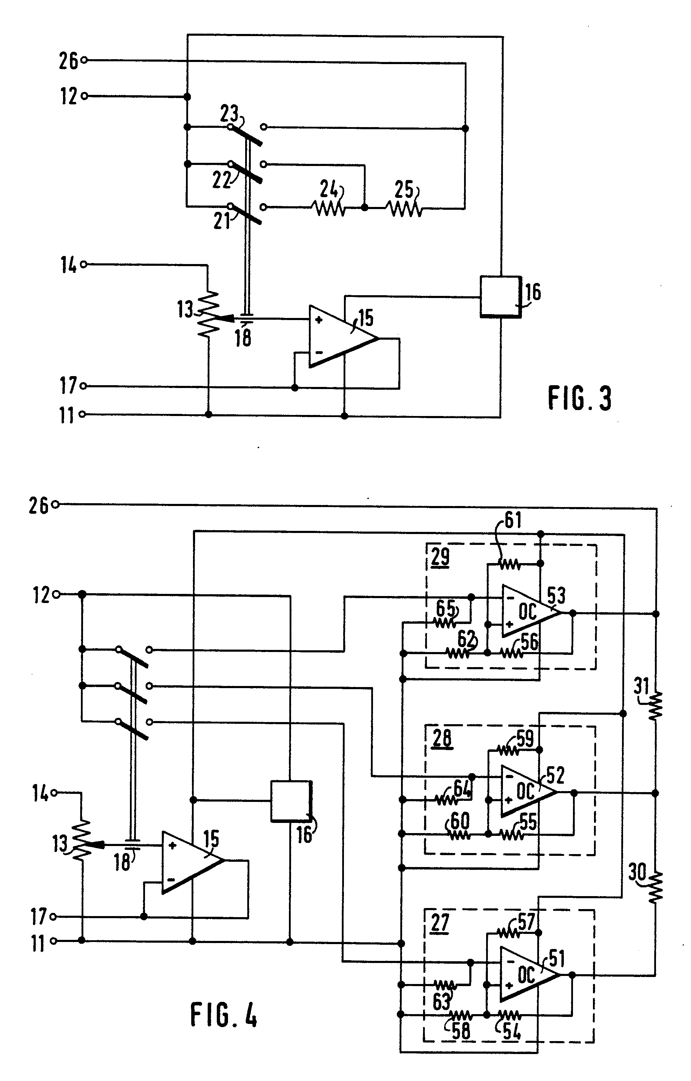

In Fig. 1 sind schematisch als Funktionsblöcke der mechanische Teil 1 eines erfindungsgemäßen elektrischen Sollwertgebers und die dazugehörige elektrische Schaltung 2 dargestellt. Dem mechanischen Teil 1 wird über ein Gestänge die Stellung des Gaspedal (beides nicht dargestellt) als Drehwinkel zugeführt. Als Ausgangswerte des mechanischen Teils 1 werden zum Gaspedal zurückgeführt: das Rückstellmoment, eine Krafthysterese und eine Momentspitze.

Als Ausgangsgröße, welche anderen Baugruppen des Kraftfahrzeugs direkt, d. h. ohne Zwischenschaltung der Elektronik 2 zugeleitet wird, liegt ein Signal vor, welches durch drehwinkelabhängige Schalter erzeugt wird. Insbesondere ein Signal zur Kennzeichnung der Leerlaufstellung kann vorzugsweise in der beschriebenen Weise erzeugt werden, damit eine zusätzliche Sicherheit gegen ein unerwünschtes, möglicherweise durch Fehler in der Elektronik hervorgerufenes Gasgeben vorhanden ist.

Der elektrischen Schaltung 2 wird eine Versorgungsspannung , vorzugsweise die Spannung des Bordnetzes des Kraftfahrzeugs zugeführt. Vom mechanischen Teil 1 wird auf ein Leitplastik-Potentiometer eingewirkt. Die somit erhaltene elektrische Größe, welche zur Stellung des Gaspedals analog ist, wird in der elektrischen Schaltung 2 einem Impedanzwandler zugeführt und steht am Ausgang 3 zur Weiterleitung an andere Baugruppen im Kraftfahrzeug, beispielsweise einem elektronischen Regler, zur Verfügung.

Gemäß einer Weiterbildung der Erfindung sind in der elektrischen Schaltung 2 Schwellwertschalter vorhanden, an deren Ausgängen Schaltsignale anstehen, welche vorgegebene Stellungen des Gaspedals kennzeichnen. In Fig. 1 sind zwei dieser Ausgänge 4, 5 dargestellt.

Die in Fig. 2 gezeigte Schaltungsanordnung stellt ein Ausführungsbeispiel für die elektrische Schaltung 2 (Fig. 1) dar. Während der Anschluß 11 mit dem Massepotential des Kraftfahrzeugs verbunden ist, wird bei 12 die Batteriespannung $U_B$ zugeführt. Das Leitplastik-Potentiometer 13 ist über den Anschluß 14 an eine Bezugsspannungsquelle angeschlossen. Ein Operationsverstärker 15 erhält seine Betriebsspannung über eine Schaltung 16 zur Spannungsstabilisierung. Geeignete als Operationsverstärker 15 und Spannungsstabilisierungsschaltung 16 verwendbare Bauelemente sind im Handel erhältlich.

Der Operationsverstärker 15 ist durch eine direkte Kopplung seines Ausgangs mit dem invertierenden Eingang als Impedanzwandler geschaltet. Zur möglichst geringen Belastung des Leitplatik-Potentiometers 13 weist der Operationsverstärker einen kleinen Eingangsruhestrom auf. Da die in Fig. 2 gezeigte Schaltung dauernd mit der Kraftfahrzeugbatterie verbunden ist, ist ein Operationsverstärker 15 vorteilhaft, dessen Ruhestrom ebenfalls gering ist.

Durch die gewählte Schaltung des Operationsverstärkers 15 wird dem Ausgang 17 eine Spannung zugeführt, welche der durch das Potentiometer 13 eingestellten Spannung entspricht und welche einem elektronischen Regler zugeführt werden kann. Der Schleifer 18 des Potentiometers 13 ist mechanisch mit einem Schalter 19 verbunden, welcher in der Leerlaufstellung des Gaspedals geöffnet ist. Sobald also das Gaspedal betätigt wird, schließt sich der Schalter 19 und am Ausgang 20 liegt eine der Batteriespannung entsprechende Spannung an, die dann ebenfalls dem elektronischen Regler zugeführt werden kann.

In Abwandlung der Schaltung nach Fig. 2 kann die Bezugsspannung für das Potentiometer 13 auch von der gleichen Spannungsquelle wie die Versorgung des Operationsverstärkers 15, beispielsweise von der Schaltung 16, erfolgen. Hierbei ist jedoch der Arbeitsbereich des Potentiometers 13 nach oben begrenzt, so daß die vom Potentiometer abgegebene Spannung unterhalb der Betriebsspannung des Operationsverstärkers 15 bleibt. Außerdem kann dem Operationsverstärker 15 eine spannungsgesteuerte Stromquelle nachgeschaltet werden bzw. die Ausgangsstufe des Operationsverstärkers als Stromquelle ausgebildet sein. In diesem Falle liegt am Ausgang 17 keine der Stellung des Schleifers 18 proportionale Spannung an, sondern es wird über den Ausgang 17 ein der Stellung des Schleifers 18 proportionaler Strom aus gegeben. Dieses kann je nach Auslegung der angeschlossenen weiteren Baugruppen vorteilhaft sein.

Fig. 3 zeigt ein anderes Ausführungsbeispiel für die Schaltung 2 (Fig. 1). Dabei sind das Potentiometer 13, der Operationsverstärker 15 sowie die Stabilisierungsschaltung 16 wie bei der Schaltungsanordnung nach Fig. 2 verbunden. Es sind lediglich anstelle des Schalters 19 (Fig. 2) drei Schalter 21, 22, 23 vorgesehen, welche mit dem Schleifer 18 des Potentiometers derart verbunden sind, daß bei Bewegung des Schleifers aus der Leerlaufstellung heraus zuerst Schalter 21, dann Schalter 22 und schließlich Schalter 23 geschlossen wird. Dadurch, daß der Schalter 21 über zwei in Reihe geschaltete Widerstände 24, 25, der Schalter 22 nur über den Widerstand 25 und der Schalter 23 direkt mit dem Anschluß 26 verbunden ist, ergibt sich in Zusammenwirkung mit einem Eingangswiderstand einer an den Anschluß 26 angeschlossenen Schaltung eine stufenweise Vergrößerung der Spannung $U_k$ bei Betätigung des Gaspedals.

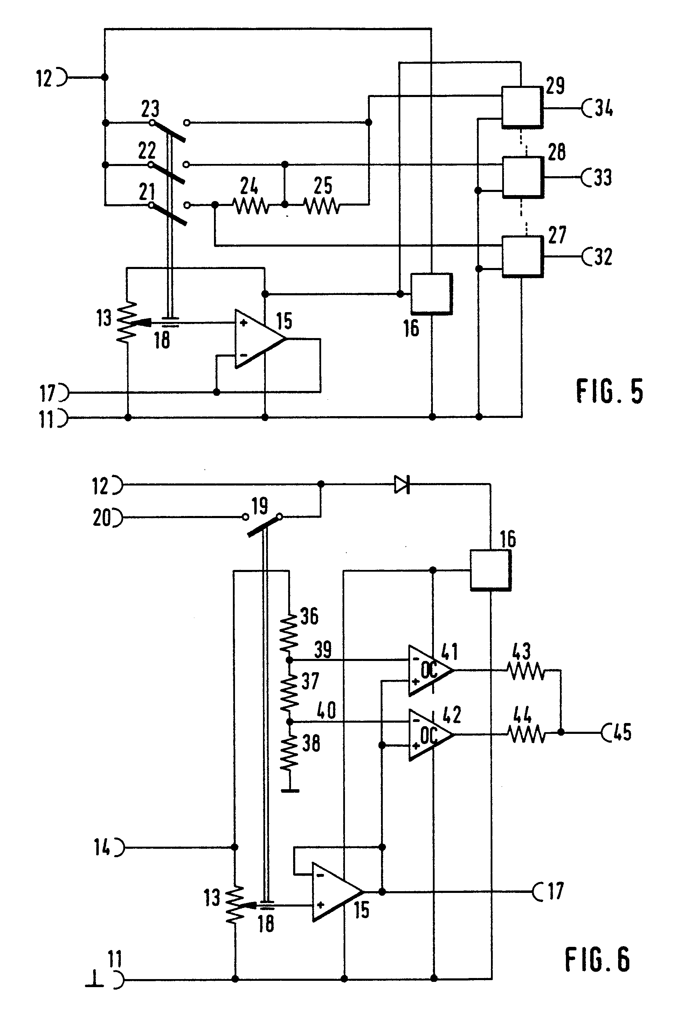

Gemäß Fig. 4 kann die Schaltung nach Fig. 3 dahingehend verändert werden, daß die Schalter 21, 22 und 23 über Operationsverstärker 27, 28 und 29 mit dem Ausgang 26 verbunden sind. Zwischen die Ausgänge der Operationsverstärker sind ebenfalls Widerstände 30, 31 geschaltet. Diese Schaltung hat gegenüber der Schaltung nach Fig. 3 den Vorteil, daß die Kontakte der Schalter 21, 22 und 23 mit geringerem Strom belastet werden.

Bei der Schaltung nach Fig. 5 werden wie bei Fig. 4 Komparatoren 27, 28, 29 verwendet. Deren Ausgänge sind jedoch unabhängig voneinander mit Anschlüssen 32, 33, 34 verbunden. An diesen Ausgängen liegen Schaltsignale an, welche jeweils eine durch die Kopplung der Schalter 21, 22, 23 mit dem Schleifer 18 gegebene Gaspedalstellung kennzeichnen. Bei diesem Ausführungsbeispiel ist übrigens, wie im Zusammenhang mit Fig. 2 erwähnt, das Potentiometer 13 an den Ausgang der Stabilisierungsschaltung 16 angeschlossen.

Fig. 6 stellt eine Schaltungsanordnung dar, bei welcher die Gaspedalstellungen, bei welchen die Spannung $U_k$ einen Sprung aufweist, nicht durch mechanische Maßnahmen, sondern mit Hilfe von Maßnahmen in der elektrischen Schaltung festgelegt sind. Das Potentiometer 13, der Operationsverstärker 15 und die Stabilisierungsschaltung 16 sind dabei wie bei der Schaltungsanordnung nach Fig. 2 geschaltet.

Zum Potentiometer 13 liegt ein aus drei Widerständen 36, 37, 38 bestehender Spannungsteiler parallel. Die Abgriffe 39, 40 des Spannungsteilers sind mit jeweils einem der Eingänge zweier Komparatoren 41, 42 verbunden. Den anderen Eingängen der Komparatoren 41, 42 wird die Ausgangsspannung des Operationsverstärkers 15 zugeleitet. Die Ausgänge der Komparatoren 41 und 42 sind über Widerstände 43, 44 mit dem Anschluß 45 verbunden, an welchem ein Signal anliegt, welches jeweils einen Sprung aufweist, wenn die am Anschluß 17 anliegende Spannung eine durch die Widerstände 36, 37 und 38 gegebene Schwelle überschreitet.

Eine nicht dargestellte getrennte Herausführung der Ausgänge der Komparatoren 41, 42 ermöglicht die Erzeugung jeweils eines nur von einer Schwelle abhängigen Signals. Die Schaltungsanordnung nach Fig. 6 kann durch Erhöhung der Zahl der Widerstände und der Operationsverstärker dahingehend ergänzt werden, daß mehr als zwei Schaltschwellen vorgesehen sind.

Um Schäden durch falsche Polung beim Einbau des Sollwertgebers in ein Kraftfahrzeug zu vermeiden, ist bei der Schaltungsanordnung nach Fig. 6 eine Diode 46 als Verpolschutz vorgesehen.

Ferner ist bei der Schaltungsanordnung nach Fig. 6 noch ein Schalter 19 vorgesehen, mit dessen Hilfe über den Ausgang 20 unabhängig von der Schaltung mit den Operationsverstärkern ein Schaltsignal abgegeben werden kann.

**Ansprüche**

1. Elektrischer Sollwertgeber für Kraftfahrzeuge, insbesondere für elektrische Gaspedal-Anlagen, mit einem Betätigungselement und einem Widerstandselement, das mit dem Betätigungselement verbunden ist, wobei einem Ausgang des elektrischen Sollwertgebers eine elektrische Spannung entnehmbar ist, welche die Stellung des Betätigungselementes wiedergibt, dadurch gekennzeichnet, daß in dem eine bauliche Einheit bildenden elektrischen Sollwertgeber eine elektrische Schaltung (2) vorgesehen ist, welche einen Impedanzwandler (15) umfaßt, dessen Ausgang den Ausgang (17) des elektrischen Sollwertgebers bildet.

2. Elektrischer Sollwertgeber nach Anspruch 1, dadurch gekennzeichnet, daß das Widerstandselement ein Leitplastik-Potentiometer (13) ist.

3. Elektrischer Sollwertgeber nach Anspruch 1, dadurch gekennzeichnet , daß das Betätigungselement ein Gaspedal ist.

4. Elektrischer Sollwert nach Anspruch 1, dadurch gekennzeichnet, daß die elektrische Schaltung eine Anordnung (46) zur Vermeidung von Zerstörungen bei falscher Polung der zugeführten Betriebsspannung (Verpolschutz) enthält.

5. Elektrische Schaltung nach Anspruch 1, dadurch gekennzeichnet, daß die elektrische Schaltung eine Schaltung zur Stabilisierung (16) der zugeführten Betriebsspannung enthält.

6. Elektrischer Sollwertgeber nach Anspruch 1, dadurch gekennzeichnet, daß ein oder mehrere elektronische Schwellwertschalter (27, 28, 29; 41, 42) vorgesehen sind, deren Ausgangssignale von einem Zustand in den anderen Zustand übergehen, wenn das Betätigungselement eine vorgegebene Stellung über-bzw. unterschreitet.

Drehwinkel α    >

Rückstellmoment    >
Krafthysterese    >
Momentspitze    >
Schaltpunkte  f(α) >
(mechanisch )

Versorgungsspannung    >

3  Ausgangsspannung
                f(α)    >

4  Schaltpunkte  f(α)    >
5  (elektronisch)

**FIG. 1**

U_B  12

20

19

16

14

15

13

11

⊥

17

**FIG. 2**

FIG. 3

FIG. 4

FIG. 5

FIG. 6